(19) Europäisches Patentamt
European Patent Office
Office européen des brevets

(11) **EP 4 345 932 A1**

(12) **EUROPEAN PATENT APPLICATION**
published in accordance with Art. 153(4) EPC

(43) Date of publication:
**03.04.2024 Bulletin 2024/14**

(21) Application number: **22852334.6**

(22) Date of filing: **05.08.2022**

(51) International Patent Classification (IPC):
**H01M 4/13** (2010.01)     **H01M 4/139** (2010.01)
**H01M 10/0525** (2010.01)

(52) Cooperative Patent Classification (CPC):
**H01M 4/13; H01M 4/139; H01M 10/0525;**
**Y02E 60/10**

(86) International application number:
**PCT/CN2022/110517**

(87) International publication number:
**WO 2023/011623 (09.02.2023 Gazette 2023/06)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **06.08.2021  CN 202110903844**

(71) Applicant: **BYD Company Limited**
**Shenzhen, Guangdong 518118 (CN)**

(72) Inventors:
• **YUAN, Xiaotao**
  **Shenzhen, Guangdong 518118 (CN)**
• **XU, Zhan**
  **Shenzhen, Guangdong 518118 (CN)**
• **CHEN, Peixing**
  **Shenzhen, Guangdong 518118 (CN)**
• **WU, Xuanwei**
  **Shenzhen, Guangdong 518118 (CN)**
• **HE, Kefeng**
  **Shenzhen, Guangdong 518118 (CN)**

(74) Representative: **Arnold & Siedsma**
**Bezuidenhoutseweg 57**
**2594 AC The Hague (NL)**

(54) **ELECTRODE, AND PREPARATION METHOD THEREFOR AND BATTERY**

(57)     An electrode, a preparation method for an electrode, and a battery are provided. The electrode includes n electrode plate layers sequentially stacked. The electrode plate layer close to a membrane side of the battery is the 1st layer, and the electrode plate layer close to a current collector side is the $n^{th}$ layer. N is a natural number greater than or equal to 2. An electrode material of the electrode plate layer at the 1st layer includes first particles, and an electrode material of the electrode plate layer at each layer from the 2nd layer to the $n^{th}$ layer includes at least the first particles and second particles. An average particle size of the first particles is greater than an average particle size of the second particles. Porosity of the electrode plate layers gradually increases layer by layer in a direction from the $n^{th}$ layer to the 1st layer.

FIG. 1

**Description**

**CROSS-REFERENCE TO RELATED APPLICATIONS**

This application claims priority to Chinese Patent Application No. 202110903844.7, entitled "ELECTRODE, PREPARATION METHOD FOR ELECTRODE, AND BATTERY" and filed on August 6, 2021, which is incorporated herein by reference in its entirety.

**FIELD**

The present disclosure relates to the field of battery assembly technologies, and more specifically, to an electrode, a preparation method for an electrode, and a battery.

**BACKGROUND**

Lithium-ion power battery is a novel rechargeable high-energy battery, mainly working by relying on lithium ions moving between positive and negative electrodes. The lithium-ion power battery has advantages such as a high energy, a high battery voltage, a wide operating temperature range, and a long storage life, and has been widely used in small electrical appliances for military and civilian purposes.

With the promotion of new energy vehicles, the lithium-ion power battery is used in the field of automobiles increasingly widely. Volumetric energy density of the lithium-ion power battery is very important to its use in vehicles. In the related art, the volumetric energy density of a battery is usually increased by increasing compaction density of electrodes. However, the ultimate compaction density of an electrode is usually affected by true density of the material itself. In addition, under high compaction pressure, the porosity of the electrode becomes extremely low, especially on a surface of the electrode, and pores are likely to be blocked, which makes it difficult for lithium ions to diffuse, resulting in a substantial degradation in kinetic performance of the electrode.

**SUMMARY**

An objective of the present disclosure is to provide novel technical solutions of an electrode, a preparation method for an electrode, and a battery.

According to a first aspect of the present disclosure, an electrode is provided, including: n electrode plate layers sequentially stacked. The electrode plate layer close to a membrane side of the battery is the 1st layer, and the electrode plate layer close to a current collector side of the battery is the nth layer. N is a natural number greater than or equal to 2. An electrode material of the electrode plate layer at the 1st layer includes first particles, and an electrode material of the electrode plate layer at each layer from the 2nd layer to the nth layer includes at least the first particles and second particles. An average particle size of the first particles is greater than an average particle size of the second particles. Porosity of the electrode plate layers gradually increases layer by layer in a direction from the nth layer to the 1st layer.

According to a second aspect of the present disclosure, a preparation method for the electrode described in the first aspect is provided, including the following steps: An electrode material is fully mixed with a conductive agent and a bonding agent to form a mixture. The mixture is heated, to bring the bonding agent into a molten state. The bonding agent in the molten state is cured, the cured bonding agent wrapping the electrode material, to obtain a powdery substance. The powdery substance is processed to form the electrode plate layer. Quantities of first particles and second particles of each electrode plate layer are adjusted in the foregoing manner, to prepare multiple electrode plate layers with different porosity. The multiple electrode plate layers are stacked sequentially and fused according to the porosity, to obtain the electrode.

According to a third aspect of the present disclosure, a battery is provided, including the electrode described in the first aspect.

According to an embodiment of the present disclosure, an electrode plate layer on a membrane side is prepared by using first particles, and the remaining electrode plate layers are prepared by using the first particles and second particles having particle sizes different from those of the first particles, which increases compaction density of the electrode. In addition, multiple electrode plate layers are arranged, and the electrode plate layers are configured such that porosity gradually increases layer by layer in a direction from the current collector side to the layer on the membrane side, which improves diffusion efficiency and improves kinetic performance of the electrode.

Other features and advantages of the present disclosure are apparent from the following detailed description of exemplary embodiments of the present disclosure with reference to the drawings.

## BRIEF DESCRIPTION OF THE DRAWINGS

Accompanying drawings are incorporated into and constitute a part of this specification, show embodiments that conform to the present disclosure, and are used together with this specification to describe the principle of the present disclosure.

FIG. 1 is a schematic diagram of an electrode and a preparation procedure therefor according to the present disclosure;
FIG. 2 is a schematic diagram of a battery according to the present disclosure; and
FIG. 3 is a flowchart of a preparation method for an electrode according to the present disclosure.

Reference numerals:

1: first electrode; 11: first particle; 12: second particle; 13: $1^{st}$ layer; 14: $n^{th}$ layer; 2: second electrode; 3: membrane; 4: first current collector; 5: second current collector; and 6: electrolyte.

## DETAILED DESCRIPTION

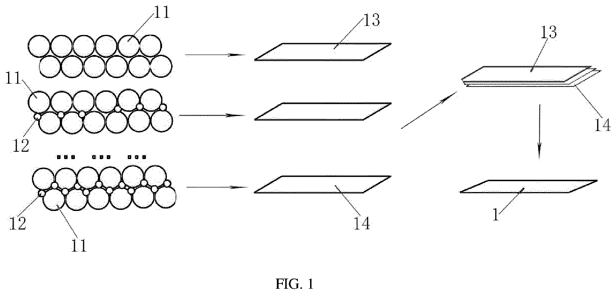

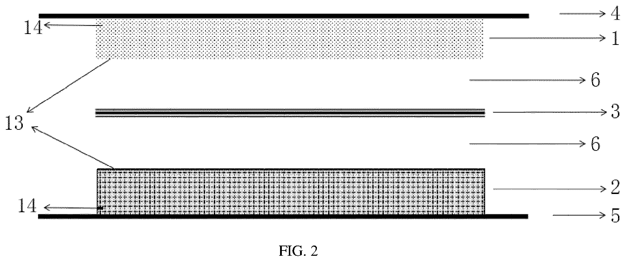

Various exemplary embodiments of the present disclosure are now described in detail with reference to the accompanying drawings. It should be noted that, unless otherwise specified, relative arrangement, numerical expressions, and numerical values of components and steps described in the embodiments do not limit the scope of the present disclosure.
The following descriptions of at least one exemplary embodiment are merely illustrative, and in no way constitute any limitation on the present disclosure and application or use of the present disclosure.
Technologies, methods, and devices known to a person of ordinary skill in related arts may not be discussed in detail, but in proper circumstances, the techniques, the methods, and the devices should be considered as a part of the specification.
In all examples shown and discussed herein, any specific value should be construed as merely exemplary and not as limitations. Therefore, other examples of exemplary embodiments may have different values.
It should be noted that, similar numbers and letters refer to similar items in the following accompanying drawings, and therefore, once an item is defined in one accompanying drawing, the item does not need to be further discussed in the subsequent accompanying drawings.
In the related art, the volumetric energy density of a battery is usually increased by increasing compaction density of electrodes. However, a densely compacted electrode reduces porosity of the electrode, and in particular, pores on a surface of the electrode are likely to be blocked. A quantity of pores of the electrode directly affects charging and discharging performance of the battery. If the porosity is low or the pores are blocked, movement of lithium ions is affected, resulting in substantial degradation in kinetic performance of the electrode. Therefore, an electrode structure not only needs to be densely compacted, but also needs to have a proper pore structure. The porosity is a percentage of a volume of pores in a material to a total volume of the material in a natural state.
As shown in FIG. 1 and FIG. 2, to resolve the foregoing technical problems, the present disclosure provides an electrode, including n electrode plate layers sequentially stacked. The electrode plate layer close to a membrane side of the battery is the $1^{st}$ layer 13, and the electrode plate layer close to a current collector side of the battery is the $n^{th}$ layer 14. n is a natural number greater than or equal to 2. An electrode material of the electrode plate layer at the $1^{st}$ layer 13 includes first particles 11, and an electrode material of the electrode plate layer at each layer from the $2^{nd}$ layer to the $n^{th}$ layer includes at least the first particles 11 and second particles 12. An average particle size of the first particles 11 is greater than an average particle size of the second particles 12. Porosity of the electrode plate layers gradually increases layer by layer in a direction from the $n^{th}$ layer 14 to the $1^{st}$ layer 13.
Specifically, in this embodiment, the electrode is of a structure in which multiple (n) electrode plate layers are arranged in a stacked manner (n is a natural number greater than or equal to 2, that is, the electrode may include two, three, or even more layers, which is not limited in the present disclosure). Such a structure is conducive to differentiating and setting characteristics, such as the electrode material, for each of the electrode plate layers. After the multiple electrode plate layers are arranged in a stacked manner, the electrode materials of the electrode plate layer at the $1^{st}$ layer 13 and the electrode plate layer at the $n^{th}$ layer 14 that are respectively located on two sides of the electrode (when the electrode is used in a battery, a current collector and a membrane are usually arranged on two sides of the electrode, the electrode plate layer close to the current collector is the $n^{th}$ layer 14, and the electrode plate layer close to the membrane is the $1^{st}$ layer 13) are determined. The electrode material includes the first particles 11 and the second particles 12. The average particle size of the first particles 11 is greater than the average particle size of the second particles 12. The electrode material of the electrode plate layer at the $1^{st}$ layer 13 may include only the first particles 11, and the electrode material of the remaining electrode plate layers (the 2nd layer to the nth layer) may include the first particles 11 (large particles) and the second particles 12 (small particles). A combination of the large particles and the small particles enables the small particles to be filled in gaps between the large particles, to achieve a higher compaction density. The remaining electrode plate layers refer to electrode plate layers other than the 1st layer 13. In other words, if the electrode has two electrode plate layers in total, and the remaining electrode plate layer is the electrode plate layer at the 2nd layer, an electrode material of the electrode plate layer at the 2nd layer includes at least the first particles 11 and the second particles 12. If the electrode has three electrode plate layers, and the remaining electrode plate layers are the electrode plate layers at the 2nd layer and the 3rd layer, the electrode plate layers at the 2nd layer and the 3rd layer respectively include at least both the first particles 11 and the second particles 12, and so on.

In addition, the porosity of the electrode plate layers may be controlled, by adjusting quantities of the large and small particles of the remaining electrode plate layers (the 2nd layer to the nth layer), to gradually increase layer by layer in the direction from the nth layer 14 to the 1st layer 13, that is, the electrode plate layer at the nth layer 14 has the lowest porosity, and the electrode plate layer at a layer on the membrane side has larger pores and higher porosity, to facilitate diffusion of lithium ions, so that the electrode has a lower impedance and a higher discharge retention rate. In addition, a greater number of electrode plate layers indicates that gradient distribution of pores (that is, a change rule that the porosity gradually increases in the direction from the nth layer 14 to the 1st layer 13) is more uniform, which is more conducive to diffusion of lithium ions. The first particles 11 selected for the electrode plate layers may have different particle sizes, and correspondingly, the second particles 12 selected for the 2nd to nth layers may also have different particle sizes, which helps construct the electrode plate layers with different porosity. Diffusion of lithium ions is restricted by a layer with lower porosity. When the electrode includes n electrode plate layers, from a perspective of porosity and compaction, in actual production, proportions of the material of the first particles 11 (the large particles) in the electrode plate layer at the 1st layer 13 and in the electrode plate layer at the nth layer 14 may be first determined, and then porosity of an intermediate electrode plate layer is adjusted to present a uniform gradient.

To sum up, the electrode in this embodiment has high compaction density, which increases volumetric energy density of a lithium-ion battery. A gradient change rule of the porosity between the electrode plate layer at the 1st layer 13 and the electrode plate layer at the nth layer 14 enables the electrode also have high kinetic performance.

Optionally, if a proportion of quantity of the first particles 11 included in the xth electrode plate layer in an electrode material in the xth layer is a,

$$a=m(\text{first particles})/m(\text{total particles})=[-x/(2n-2)+(2n-1)/(2n-2)] \quad (1)$$

where n is a natural number greater than 2, x is a natural number less than or equal to n, and m is a quantity of particles.

Specifically, the porosity of each electrode plate layer may be achieved by adjusting quantities of the first particles 11 and the second particles 12. A gradient change of the porosity of electrode plate layers is achieved by adjusting quantities of large and small particles, leading to easy implementation in actual production and a more accurate adjustment result. For example, in an electrode having two electrode plate layers, a proportion of the first particles 11 in the electrode plate layer at the 1st layer 13 is 100%, and a proportion of the first particles 11 in the electrode plate layer at the 2nd layer is 50%. For another example, in an electrode having four electrode plate layers, a proportion of the first particles 11 in the electrode plate layer at the 1st layer is 100%, a proportion of the first particles 11 in the electrode plate layer at the 2nd layer is 83.3%, a proportion of the first particles 11 in the electrode plate layer at the 3rd layer is 66.7%, and a proportion of the first particles 11 in the electrode plate layer at the 4th layer is 50%. By setting the quantity of the first particles 11 according to the foregoing rule summarized in the present disclosure, a quantity of the first particles 11 in the electrode plate layer at the nth layer 14 may be always maintained at least greater than 50%, to ensure that the porosity of the electrode plate layers is not too low.

Optionally, the average particle size of the first particles 11 ranges from 0.90 $\mu$m to 1.60 $\mu$m, and the average particle size of the second particles 12 ranges from 0.25 $\mu$m to 0.70 $\mu$m.

Specifically, in this embodiment, the average particle size of the first particles 11 ranges from 0.90 $\mu$m to 1.60 $\mu$m, and the average particle size of the second particles 12 ranges from 0.25 $\mu$m to 0.70 $\mu$m. If the average particle size of the first particles 11 or the second particles 12 is too large, a specific surface area of the particles becomes smaller, and a solid phase diffusion path becomes longer, resulting in slower electrochemical reaction power of the material and impact on the kinetic performance of the battery. However, if the average particle size of the first particles 11 or the second particles 12 is too small, a specific surface area of the particles becomes larger, correspondingly, an electrochemical active surface area is increased, resulting in more side reactions on a surface of the particle material, and degraded cycle performance of the battery. The electrochemical active surface area refers to a site on a particle surface that can participate in an electrochemical reaction. Preferably, the average particle size of the first particles 11 ranges from 1.0 $\mu$m to 1.2 $\mu$m, and the average particle size of the second particles 12 ranges from 0.35 $\mu$m to 0.55 $\mu$m.

Optionally, a radius of the first particle 11 is R, and a radius of the second particle 12 is less than or equal to 0.414R.

Specifically, in this embodiment, all the adopted electrode materials may be approximately regarded as spherical particles. Even if particles with the same particle size are closely packed, there are still pores between the particles, and if the pores are filled with smaller particles, the compaction of the material can further be improved. In other words, if the first particles 11 are closely packed, if the radius of the first particle 11 is R, a pore between the first particles 11 can accommodate a particle with a radius of at most 0.414R. Therefore, when the radius r of the second particle 12 is less than or equal to 0.414R, the second particle 12 can be smoothly filled in the pore between the first particles 11. A material combined in such a way has ultra-high compaction. The material combined with ultra-high compaction may be used as the electrode plate layer at the $n^{th}$ layer 14, and a filling quantity of the second particles 12 (the small particles) may be decreased from the electrode plate layer at the $n^{th}$ layer 14 to the electrode plate layer at the $1^{st}$ layer 13, to gradually increases the porosity layer by layer, and construct a gradient pore structure that is conducive to diffusion of lithium ions. Such an electrode structure has both high compaction and high diffusion efficiency of ions.

Optionally, the electrode plate layer at each layer from the $2^{nd}$ layer to the $n^{th}$ layer further includes third particles respectively. A maximum radius of the third particles is less than or equal to 0.225R.

Specifically, in this embodiment, other than the electrode plate layer at the $1^{st}$ layer 13 that is made of the first particles 11, the remaining electrode plate layers may further be prepared by using three particle materials with different sizes. For example, the electrode plate layer at the $n^{th}$ layer 14 may be prepared by using the first particles 11, the second particles 12, and the third particles. In this case, compared with the two particle materials in the foregoing embodiment, a maximum radius of the third particle is 0.225R. The electrode plate layer constructed by using three particle materials with different sizes has higher compaction. After the material of the electrode plate layer at the $n^{th}$ layer 14 is adjusted, filling quantities of the second particles 12 and/or the third particles may be gradually decreased from the electrode plate layer at the $n^{th}$ layer 14 to the electrode plate layer at the $1^{st}$ layer 13, to gradually increase the porosity layer by layer, and construct the gradient pore structure that is conducive to diffusion of lithium ions. Use of the three different size particle materials, not only increases the compaction density of the electrode, but also facilitates adjustment of the change gradient of the porosity, which is conducive to implementing the uniform change of the pore structure of each layer.

Optionally, a particle size of the first particle 11 and a particle size of the second particle 12 used in the electrode plate layer at the $x^{th}$ layer meet the following condition:

$$1/d_{11} = [a*d_{x1}^2 + (1-a)d_{x2}^2]/[a*d_{x1}^3 + (1-a)d_{x2}^3] \ (2)$$

where x is a natural number greater than 1 and less than or equal to 2, and a is a proportion of quantity of the first particles 11 in the $x^{th}$ layer in the electrode material at the $x^{th}$ layer. $d_{11}$ represents the particle size of the first particle 11 in the electrode plate layer at the $1^{st}$ layer 13, and $d_{x1}$ represents the particle size of the first particle 11 in the electrode plate layer at the $x^{th}$ layer. $d_{x2}$ represents the particle size of the second particle 12 in the $x^{th}$ layer.

Generally, if the particles of the electrode material become smaller, the tortuosity $\sigma$ of the electrode becomes larger, which is not conducive to the diffusion of the ions. In this embodiment, when the first particles 11 and the second particles 12 are proportioned, the tortuosity $\sigma$ of all the electrode plate layers may be made similar by adjusting the particle sizes of the first particles 11 and the second particles 12 of each layer. In other words, the particle size of the first particle 11 of the electrode plate layer at the $1^{st}$ layer 13 may be different from the particle size of the first particle 11 of the remaining electrode plate layers at the $2^{nd}$ to $n^{th}$ layers. When the average particle sizes of the first particles 11 and the second particles 12 of each electrode plate layer both meet the formula (2), it may be ensured that the tortuosity $\sigma$ of all the electrode plate layers is similar, so that performance of the electrode is more uniform, which is conducive to diffusion of lithium ions, and further improves the diffusion efficiency of ions. The tortuosity $\sigma$ is a parameter used for describing a pore channel structure of an electrode. The larger the tortuosity, the more tortuous the internal pore channels, and the longer the path that the ions pass to diffuse from the surface to the current collector.

Optionally, a quantity of the electrode plate layers ranges from 2 to 10, a quantity of the second particles 12 included in the electrode materials of the remaining electrode plate layers other than the $1^{st}$ layer 13 gradually decreases layer by layer in a direction from being close to the current collector side to being close to the membrane side.

Specifically, in this embodiment, the quantity of the electrode plate layers may range from 2 to 10, to construct a uniform pore structure. If the quantity of the electrode plate layers is too large, the change of porosity between two adjacent layers is small. An excessively small gradient change of porosity does not significantly improve diffusion of lithium ions, but significantly affects production efficiency. Therefore, a proper quantity of layers is selected to take both the gradient change of porosity and the production efficiency into account. In addition, by adjusting a proportion of the second particles 12 in each layer, gradient adjustment of the porosity may be implemented.

Optionally, the electrode material includes a positive electrode material, and the positive electrode material is at least one of lithium iron phosphate, lithium nickel cobalt manganese oxide, and lithium manganate.

Specifically, the electrode provided in this embodiment may be made of the positive electrode material and serve as a positive electrode of the battery, or may be made of a negative electrode material and serve as a negative electrode of the battery. At least one of the lithium iron phosphate, lithium nickel cobalt manganese oxide, and lithium manganate may be selected as the positive electrode material. The negative electrode material is at least one of artificial graphite, natural graphite, lithium titanate, soft carbon, and hard carbon.

Advantages of the electrode provided in the first aspect are further described below with reference to some examples and comparative examples.

Example 1

A double-layer electrode solution was used, and a lithium iron phosphate material was selected as the electrode material. The electrode plate layer at the 2nd layer was made of the first particles 11 (the average particle size D50=1.38 $\mu$m) and the second particles 12 (the average particle size D50=0.57 $\mu$m) that were mixed at a ratio of 1:1 and a mass ratio of 93:7. The electrode plate layer at the 1st layer 13 was made of the first particles 11 (the average particle size D50=1.26 $\mu$m).

Example 2

A triple-layer electrode solution was used, and a lithium iron phosphate material was selected as the electrode material. The electrode plate layer at the 3rd layer was made of the first particles 11 (the average particle size D50=1.38 $\mu$m) and the second particles 12 (the average particle size D50=0.57 $\mu$m) that were mixed at a ratio of 1:1 and a mass ratio of 93:7. According to the foregoing design rule, in the electrode plate layer at the intermediate 2nd layer, the average particle size of the first particles 11 was 1.30 $\mu$m, the average particle size of the second particles 12 was 0.53 $\mu$m, and the mass ratio was 97:3. The electrode plate layer at the 1st layer 13 was made of the first particles 11 (the average particle size D50=1.26 $\mu$m).

Example 3

A triple-layer electrode solution was used, and a lithium iron phosphate material was selected as the electrode material. The electrode plate layer at the 3rd layer was made of the first particles 11 (the average particle size D50=1.19 $\mu$m) and the second particles 12 (the average particle size D50=0.493 $\mu$m) that were mixed at a ratio of 1:1 and a mass ratio of 93:7. According to the foregoing design rule, in the electrode plate layer at the intermediate 2nd layer, the average particle size of the first particles 11 was 1.12 $\mu$m, the average particle size of the second particles 12 was 0.466 $\mu$m, and the mass ratio was 97:3. The electrode plate layer at the 1st layer 13 was made of the first particles 11 (the average particle size D50=1.09 $\mu$m).

Comparative example 1

A double-layer electrode solution was used, and a lithium iron phosphate material was selected as the electrode material. The electrode plate layer at the 2nd layer was made of the first particles (the average particle size D50=1.26 $\mu$m), and the electrode plate layer at the 1st layer was made of the first particles (the average particle size D50=1.38 $\mu$m) and the second particles (the average particle size D50=0.57 $\mu$m) that were mixed at a ratio of 1:1 ratio and a mass ratio of 93:7.

Comparative example 2

A single-layer electrode solution was used, and a lithium iron phosphate material was selected as the electrode material. The first particles (the average particle size D50=1.38 $\mu$m) and the second particles (the average particle size D50=0.57 $\mu$m) were mixed at a ratio of 1:1 and a mass ratio of 96:4.

Comparative example 3

A single-layer electrode solution was used, and a lithium iron phosphate material with an average particle size D50=1.38 $\mu$m was selected as the electrode material.

The following data table is obtained through the foregoing examples and comparative examples.

Table 1

| Example | Compaction density under a same rolling pressure (g/cm$^3$) |
|---|---|
| Example 1 | 2.702.65 |
| Example 2 | 2.722.67 |
| Example 3 | 2.682.63 |
| Comparative example 1 | 2.682.63 |
| Comparative example 2 | 2.722.67 |
| Comparative example 3 | 2.582.53 |

Table 1 shows compaction density corresponding to an electrode with a width of 5 cm under a rolling pressure of 1 MPa. It may be learned that although small particles (the second particles 12) are added, a multi-layer coating design can maintain the compaction of the electrode plates at a high level.

Table 2

| Example | 0.33C discharge capacity per gram of a mixture (mAh/g) |
|---|---|
| Example 1 | 137.5 |
| Example 2 | 138.0 |
| Example 3 | 138.2 |
| Comparative example 1 | 135.8 |
| Comparative example 2 | 137.2 |
| Comparative example 3 | 136.8 |

Table 2 shows an electrode obtained through multi-layer coating according to a gradient porosity design. The electrode obtained through multi-layer coating according to the gradient porosity design has higher capacity performance with a same design parameter.

Table 3

| Example | DCIR (m$\Omega$) |
|---|---|
| Example 1 | 51.8 |
| Example 2 | 50.8 |
| Example 3 | 48.2 |
| Comparative example 1 | 56.9 |
| Comparative example 2 | 54.2 |
| Comparative example 3 | 53.6 |

Table 3 shows that under a condition of 50% SOC direct current internal resistance, the electrode in the present disclosure has lower impedance, which is conducive to diffusion of lithium ions.

Table 4

| Example | 0.2C/2C discharge rate |
|---|---|
| Example 1 | 0.940 |
| Example 2 | 0.959 |
| Example 3 | 0.960 |
| Comparative example 1 | 0.875 |

(continued)

| Example | 0.2C/2C discharge rate |
|---|---|
| Comparative example 2 | 0.898 |
| Comparative example 3 | 0.918 |

Table 4 shows that under a condition of a 0.2/2C discharge capacity rate, the electrode in the present disclosure has a higher discharge retention rate, which is conducive to diffusion of lithium ions.

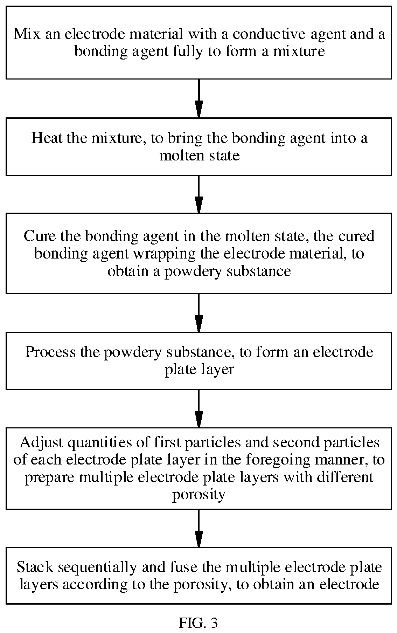

As shown in FIG. 3, according to a second aspect of the present disclosure, the preparation method for an electrode described in the first aspect is provided, which includes the following steps:
An electrode material is fully mixed with a conductive agent and a bonding agent to form a mixture.

The mixture is heated, to bring the bonding agent into a molten state.

The bonding agent in the molten state is cured, the cured bonding agent wrapping the electrode material, to obtain a powdery substance.

The powdery substance is processed to form the electrode plate layer.

Quantities of first particles 11 and second particles 12 of each electrode plate layer are adjusted in the foregoing manner, to prepare multiple electrode plate layers with different porosity.

The multiple electrode plate layers are stacked sequentially and fused according to the porosity, to obtain the electrode.

Specifically, an example of preparing the positive electrode of the battery is used. First, according to the solution provided in the first aspect, a positive electrode material with a proper particle size is selected, and the positive electrode material is smashed into particles, and is fully mixed with the conductive agent and the bonding agent to form the mixture. The positive electrode material may be selected from the lithium iron phosphate, lithium nickel cobalt manganese oxide, lithium manganate, and the like. The conductive agent includes carbon nanotube, graphene, carbon black, carbon fiber, and the like. After the mixture is heated to bring the bonding agent into a molten state, the mixture is then cured, so that the bonding agent fully wraps the particle material to form the powdery substance. The powdery substance is processed, to form a basic electrode plate with a specific size and width. Such a basic electrode plate is the electrode plate layer used for finally processing the electrode. According to the porosity, the prepared multiple electrode plate layers are stacked and fused, to finally obtain the electrode having high compaction and a uniform porosity change.

During preparation of the electrode plate layer at the $1^{st}$ layer 13, only the first particles 11 need to added as the electrode material, and for the remaining layers, according to the technical solution in the first aspect, the first particles 11, the second particles 12, even the third particles, and the like may be added as actually required. A quantity ratio of the first particles 11 to the second particles 12 in each electrode plate layer may be determined according to the formula (1), and the particle sizes of the first particles 11 and the second particles 12 in each electrode plate layer may be determined according to the formula (2). The electrode prepared by using the preparation method according to the present disclosure has ultra-high compaction density, which increases the volumetric energy density of the battery. In addition, the porosity of the electrode plate layers at the $1^{st}$ layer 13 to the $n^{th}$ layer 14 of the electrode has a specific gradient change rule, and the kinetic performance of the electrode can also be ensured. The whole preparation process is simple, and the preparation efficiency is high.

Optionally, that the bonding agent in the molten state is cured includes: curing the bonding agent into fibers through an electrostatic spinning process.

Specifically, during curing of the bonding agent in the molten state, an electrostatic spinning process may be selected. The electrostatic spinning is a special form of electrostatic atomization of a polymer fluid. In this case, the substance that is atomized or split is not a tiny droplet, but a tiny jet of a polymer, which can run a considerable distance, and be ultimately cured into a fiber. Polymer filaments with a nanometer-diameter can be produced in this manner, so that the bonding between the bonding agent and the particles of the electrode material is firmer and more even.

Optionally, a process of stacking sequentially and fusing the multiple electrode plate layers includes: a hot pressing process.

Specifically, the hot pressing process can implement high compaction of the particle material and also fuse the layers more thoroughly, which enhance the integrity of the electrode.

According to a third aspect of the present disclosure, a battery is provided, including the electrode described in the first aspect.

Optionally, the battery includes: a first current collector, a first electrode 1, a membrane, a second electrode 2, and a second current collector that are sequentially arranged. An electrolyte is arranged respectively between the first electrode 1 and the membrane and between the second electrode 2 and the membrane.

As shown in FIG. 2, the battery provided in this embodiment includes a first current collector 4, the first electrode 1, a membrane 3, the second electrode 2, and a second current collector 5 that are sequentially arranged. An electrolyte 6 is arranged respectively between the first electrode 1 and the membrane 3 and between the second electrode 2 and the membrane 3. The first electrode 1 is a negative electrode, the second electrode 2 is a positive electrode, and both adopt the electrode structure according to the first aspect. During assembly, the electrode plate layer at the 1st layer 13 of the first electrode 1 and the electrode plate layer at the 1st layer 13 of the second electrode 2 are both arranged close to the membrane 3, and the electrode plate layer at the nth layer 14 of the first electrode 1 is close to the first current collector 4 and the electrode plate layer at the nth layer 14 of the second electrode 2 is close to the second current collector 5. The first current collector 4 may be made of copper foil, and the second current collector 5 may be made of aluminum foil. The battery in this embodiment has higher volumetric energy density and kinetic performance.

The foregoing embodiments focus on descriptions of differences between the various embodiments. Different optimization features among the various embodiments provided that they do not contradict each other, can be combined to form a more optimal embodiment. In consideration of brevity, details are not described herein again.

Although some specific embodiments of the present disclosure have been described in detail by way of examples, a person skilled in the art should understand that the foregoing examples are only for description and are not intended to limit the scope of the present disclosure. A person skilled in the art should appreciate that modifications may be made to the foregoing embodiments without departing from the scope and spirit of the present disclosure. The scope of the present disclosure is limited by the appended claims.

## Claims

1.  An electrode, used in a battery, the electrode comprising:

    n electrode plate layers sequentially stacked,
    wherein the electrode plate layer close to a membrane side of the battery is the 1st layer, and the electrode plate layer close to a current collector side of the battery is the nth layer, n being a natural number greater than or equal to 2;
    an electrode material of the electrode plate layer at the 1st layer comprises first particles, and an electrode material of the electrode plate layer at each layer from the 2nd layer to the nth layer comprises at least the first particles and second particles, an average particle size of the first particles being greater than an average particle size of the second particles; and
    a porosity of each of the electrode plate layers gradually increases layer by layer in a direction from the nth layer to the 1st layer.

2.  The electrode according to claim 1, wherein a proportion of quantity of the first particles comprised in the electrode plate layer at the $x^{th}$ layer in the electrode material at the $x^{th}$ layer is: $[-x/(2n-2)+(2n-1)/(2n-2)]$, wherein x is a natural number less than or equal to n.

3.  The electrode according to claim 1, wherein an average particle size of the first particles ranges from 0.90 $\mu$m to 1.60 $\mu$m, and an average particle size of the second particles ranges from 0.25 $\mu$m to 0.70 $\mu$m.

4.  The electrode according to claim 3, wherein the average particle size of the first particles ranges from 1.0 $\mu$m to 1.2 $\mu$m, and the average particle size of the second particles ranges from 0.35 $\mu$m to 0.55 $\mu$m.

5.  The electrode according to any one of claims 1 to 4, wherein a radius of the first particles is R, and a radius of the second particles is less than or equal to 0.414R.

6.  The electrode according to claim 5, wherein the electrode plate layer at each layer from the 2nd layer to the nth layer further comprises third particles, a radius of the third particles being less than or equal to 0.225R.

7.  The electrode according to any one of claims 1 to 6, wherein a particle size of the first particle and a particle size of the second particle that are used in the electrode plate layer at the $x^{th}$ layer meet the following condition:

$$1/d_{11}=[a*d_{x1}^{2}+(1-a)d_{x2}^{2}]/[a*d_{x1}^{3}+(1-a)d_{x2}^{3}]$$

    wherein x is greater than 1 and less than or equal to n, and a is a proportion of quantity of the first particles in the $x^{th}$ layer in the electrode material at the $x^{th}$ layer; $d_{11}$ represents the particle size of the first particle in the electrode plate layer at the 1st layer, and $d_{x1}$ represents the particle size of the first particle in the electrode plate layer at the $x^{th}$ layer; and $d_{x2}$ is the particle size of the second particle in the $x^{th}$ layer.

8. The electrode according to any one of claims 1 to 7, wherein a quantity of the electrode plate layers ranges from 2 to 10, a quantity of the second particles comprised in the electrode materials of the remaining electrode plate layers other than the 1st layer gradually decreases layer by layer in a direction from being close to the current collector side to being close to the membrane side.

9. The electrode according to any one of claims 1 to 8, wherein the electrode material comprises a positive electrode material, and the positive electrode material is at least one of lithium iron phosphate, lithium nickel cobalt manganese oxide, and lithium manganate.

10. The electrode according to any one of claims 1 to 9, wherein the electrode material comprises a negative electrode material, and the negative electrode material is at least one of artificial graphite, natural graphite, lithium titanate, soft carbon, and hard carbon.

11. A preparation method for an electrode, applied to the electrode according to any one of claims 1 to 10, comprising the following steps:

    mixing an electrode material fully with a conductive agent and a bonding agent to form a mixture;
    heating the mixture, to bring the bonding agent into a molten state;
    curing the bonding agent in the molten state, the cured bonding agent wrapping the electrode material, to obtain a powdery substance;
    processing the powdery substance to form the electrode plate layer;
    adjusting quantities of first particles and second particles of each electrode plate layer in the foregoing manner, to prepare a plurality of electrode plate layers with different porosity; and
    stacking sequentially and fusing the plurality of electrode plate layers according to the porosity, to obtain the electrode.

12. The preparation method for an electrode according to claim 11, wherein the curing the bonding agent in the molten state comprises: curing the bonding agent into fibers through an electrostatic spinning process.

13. The preparation method for an electrode according to claim 11 or 12, wherein a process of the stacking sequentially and fusing the plurality of electrode plate layers comprises: a hot pressing process.

14. A battery, comprising the electrode according to any one of claims 1 to 10.

15. The battery according to claim 14, comprising: a first current collector, a first electrode, a membrane, a second electrode, and a second current collector that are sequentially arranged, an electrolyte being arranged respectively between the first electrode and the membrane and between the second electrode and the membrane, and the first electrode and/or the second electrode being the electrode according to any one of claims 1 to 10.

FIG. 1

FIG. 2

Mix an electrode material with a conductive agent and a
bonding agent fully to form a mixture

Heat the mixture, to bring the bonding agent into a
molten state

Cure the bonding agent in the molten state, the cured
bonding agent wrapping the electrode material, to
obtain a powdery substance

Process the powdery substance, to form an electrode
plate layer

Adjust quantities of first particles and second particles
of each electrode plate layer in the foregoing manner, to
prepare multiple electrode plate layers with different
porosity

Stack sequentially and fuse the multiple electrode plate
layers according to the porosity, to obtain an electrode

FIG. 3

## INTERNATIONAL SEARCH REPORT

| | International application No. |
|---|---|
| | **PCT/CN2022/110517** |

| A. | CLASSIFICATION OF SUBJECT MATTER |
|---|---|

H01M 4/13(2010.01)i; H01M 4/139(2010.01)i; H01M 10/0525(2010.01)i

According to International Patent Classification (IPC) or to both national classification and IPC

| B. | FIELDS SEARCHED |
|---|---|

Minimum documentation searched (classification system followed by classification symbols)

    H01M

Documentation searched other than minimum documentation to the extent that such documents are included in the fields searched

Electronic data base consulted during the international search (name of data base and, where practicable, search terms used)

    CNTXT; CNKI; ENTXT; ENTXTC; DWPI: 电极, 极片, 层, 多层, 第二, 第2, 粒径, 孔隙率, electrode, pole, piece, layer, multi, second, particle, size, porosity

| C. | DOCUMENTS CONSIDERED TO BE RELEVANT |
|---|---|

| Category* | Citation of document, with indication, where appropriate, of the relevant passages | Relevant to claim No. |
|---|---|---|
| X | US 2002028380 A1 (NISSAN MOTOR CO., LTD.) 07 March 2002 (2002-03-07) description, paragraphs 8-68, and figures 3-11 | 1-10, 14, 15 |
| Y | US 2002028380 A1 (NISSAN MOTOR CO., LTD.) 07 March 2002 (2002-03-07) description, paragraphs 8-68, and figures 3-11 | 11-13 |
| X | US 2014287316 A1 (LG CHEMICAL LTD.) 25 September 2014 (2014-09-25) description, paragraphs 11-60, and figure 2 | 1-10, 14, 15 |
| Y | US 2014287316 A1 (LG CHEMICAL LTD.) 25 September 2014 (2014-09-25) description, paragraphs 11-60, and figure 2 | 11-13 |
| Y | CN 103208610 A (HUTCHINSON) 17 July 2013 (2013-07-17) description, paragraphs 13-34 | 11-13 |
| A | US 2015280221 A1 (NEXEON LTD.) 01 October 2015 (2015-10-01) entire document | 1-15 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **13 October 2022** | **21 October 2022** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2022/110517**

| Patent document cited in search report | | | Publication date (day/month/year) | Patent family member(s) | | | Publication date (day/month/year) |
|---|---|---|---|---|---|---|---|
| US | 2002028380 | A1 | 07 March 2002 | EP | 1184918 | A2 | 06 March 2002 |
| | | | | JP | 2002151055 | A | 24 May 2002 |
| | | | | US | 7138208 | B2 | 21 November 2006 |
| | | | | DE | 60140163 | E | 26 November 2009 |
| US | 2014287316 | A1 | 25 September 2014 | WO | 2014116029 | A1 | 31 July 2014 |
| | | | | EP | 2797142 | A1 | 29 October 2014 |
| | | | | US | 2017125788 | A1 | 04 May 2017 |
| | | | | KR | 20140095980 | A | 04 August 2014 |
| | | | | CN | 104126242 | A | 29 October 2014 |
| | | | | JP | 2015511389 | A | 26 April 2015 |
| | | | | CN | 106935793 | A | 07 July 2017 |
| CN | 103208610 | A | 17 July 2013 | KR | 20130084638 | A | 25 July 2013 |
| | | | | MX | 2013000698 | A | 09 January 2014 |
| | | | | CA | 2802199 | A1 | 17 July 2013 |
| | | | | EP | 2618409 | A1 | 24 July 2013 |
| | | | | US | 2017025673 | A1 | 26 January 2017 |
| | | | | MX | 374491 | B | 02 September 2020 |
| | | | | FR | 2985857 | A1 | 19 July 2013 |
| | | | | BR | 102013001162 | A2 | 12 July 2016 |
| | | | | JP | 2013152932 | A | 08 August 2013 |
| | | | | US | 2013183577 | A1 | 18 July 2013 |
| | | | | RU | 2013101584 | A | 20 July 2014 |
| | | | | ES | 2610217 | T3 | 26 April 2017 |
| | | | | ZA | 201300452 | A | 25 September 2013 |
| | | | | IN | 333405 | B | 06 March 2020 |
| US | 2015280221 | A1 | 01 October 2015 | JP | 2015537347 | A | 24 December 2015 |
| | | | | WO | 2014068318 | A1 | 08 May 2014 |
| | | | | KR | 20150086288 | A | 27 July 2015 |
| | | | | GB | 201219729 | D0 | 12 December 2012 |
| | | | | EP | 2915204 | A1 | 09 September 2015 |
| | | | | US | 10008716 | B2 | 26 June 2018 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202110903844